# EUROPEAN PATENT APPLICATION

(11) **EP 2 105 323 A1**
(43) Date of publication of application: **30.09.2009**
(21) Application number: 08006134.4
(22) Date of filing: 28.03.2008
(51) Int. Cl.: B60B 33/00

(54) **Castor**

(71) Applicant: Tsai, Po-Chuan, Zhungsheng Cun Rende Hsiang, Tainan Hsien (TW)
(72) Inventor: Tsai, Po-Chuan, Zhungsheng Cun Rende Hsiang, Tainan Hsien (TW)
(74) Representative: Reichel, Wolfgang

(57) **Abstract**

A castor includes an upright post (31), a castor body (30) rotatably mounted on the upright post, two rollers (33) mounted on two opposite sides of the castor body, a support shaft (32) rotatably mounted in the castor body and having two opposite ends each inserted into a respective one of the rollers, and two elastic washers (34) each mounted on a respective one of the rollers. Thus, each of the elastic washers has a variable color (340) and can be exposed from the receiving groove (330) of the respective roller, thereby enhancing the aesthetic quality of the castor. In addition, each of the elastic washers has a shock-absorbing function so that each of the rollers is rotatable smoothly, thereby providing a comfortable sensation to a user when the castor is moving and sliding.

## Description

The present invention relates to a castor and, more particularly, to a castor for a chair.

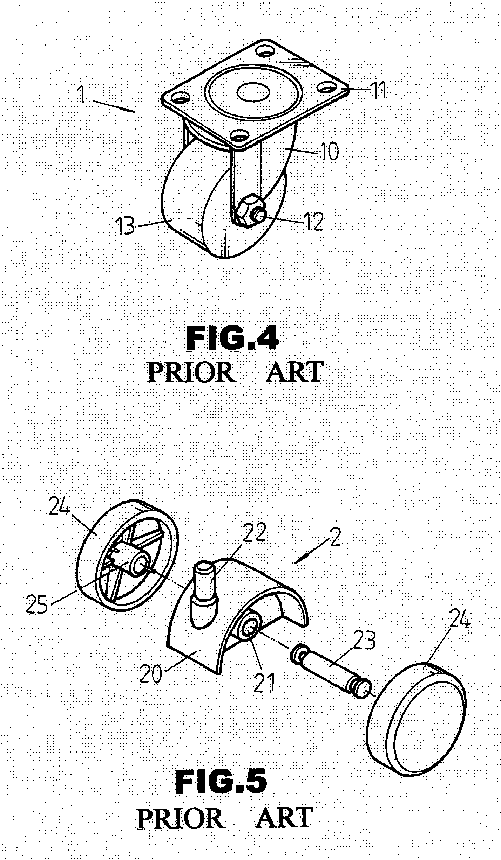

A conventional castor 1 in accordance with the prior art shown in Fig. 4 comprises a connecting plate 11 for attachment to a leg of a chair, a rotation member 10 rotatably mounted on the connecting plate 11, and a roller 13 rotatably mounted on the rotation member 10 by a locking screw 12. However, the conventional castor 1 is not movable smoothly and is worn out easily.

Another conventional castor 2 in accordance with the prior art shown in Fig. 5 comprises an upright post 22, a castor body 20 rotatably mounted on the upright post 22 and provided with a shaft hole 21, two rollers 24 rotatably mounted on two opposite sides of the castor body 20 and each having a mounting tube 25, and a support shaft 23 rotatably mounted in the shaft hole 21 of the castor body 20 and having two opposite ends each inserted into the mounting tube 25 of a respective one of the two rollers 24. However, each of the two rollers 24 lacks variation of colors, thereby decreasing the aesthetic quality of the castor.

The primary objective of the present invention is to provide a castor having variable colors.

In accordance with the present invention, there is provided a castor, comprising an upright post, a castor body rotatably mounted on the upright post, two rollers mounted on two opposite sides of the castor body, a support shaft rotatably mounted in the castor body and having two opposite ends each inserted into a respective one of the two rollers, and two elastic washers each mounted on a respective one of the two rollers.

Another objective of the present invention is to provide a castor, wherein each of the two elastic washers has a variable color and can be exposed outwardly from the receiving groove of the respective roller, thereby enhancing the aesthetic quality of the castor.

A further objective of the present invention is to provide a castor, wherein each of the two elastic washers has a shock-absorbing function, so that each of the two rollers is rotatable smoothly, thereby providing a comfortable sensation to a user when the castor is moving and sliding.

A further objective of the present invention is to provide a castor, wherein each of the two elastic washers provides a shock-absorbing function to each of the two rollers, so that each of the two rollers is not worn out easily during a long-term utilization, thereby enhancing the lifetime of the castor.

Further benefits and advantages of the present invention will become apparent after a careful reading of the detailed description with appropriate reference to the accompanying drawings.

In the drawings:
Fig. 1 is a perspective view of a castor in accordance with the preferred embodiment of the present invention.
Fig. 2 is an exploded perspective view of the castor as shown in Fig. 1.
Fig. 3 is a front cross-sectional view of the castor as shown in Fig. 1.
Fig. 4 is a perspective view of a conventional castor in accordance with the prior art.
Fig. 5 is a perspective view of another conventional castor in accordance with the prior art.

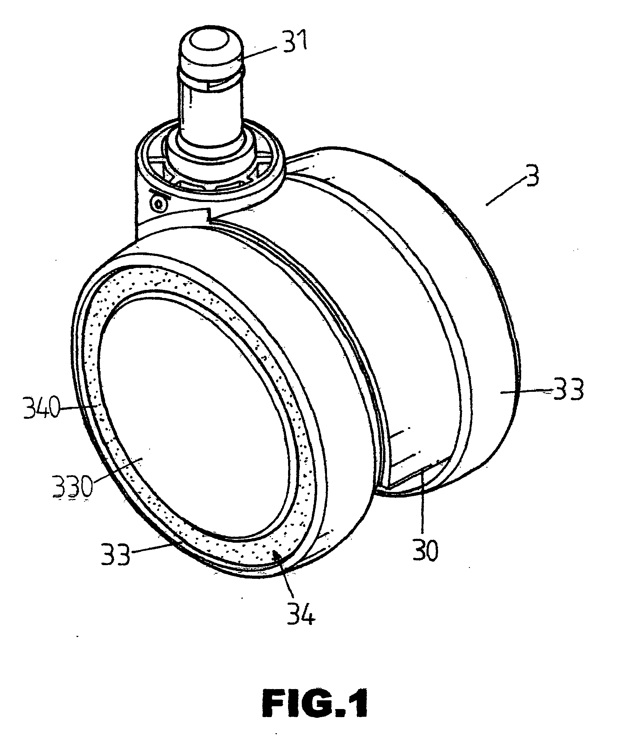

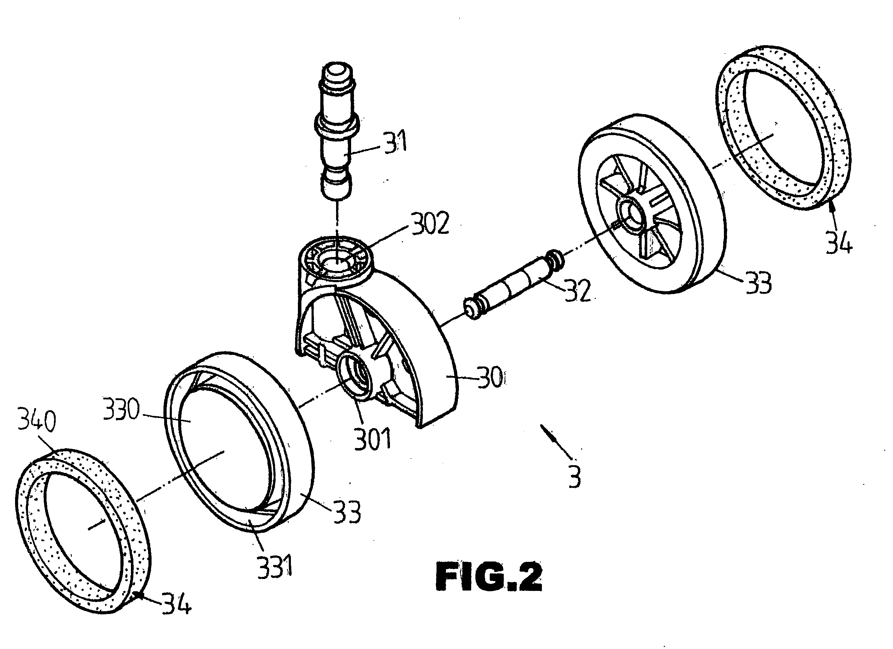

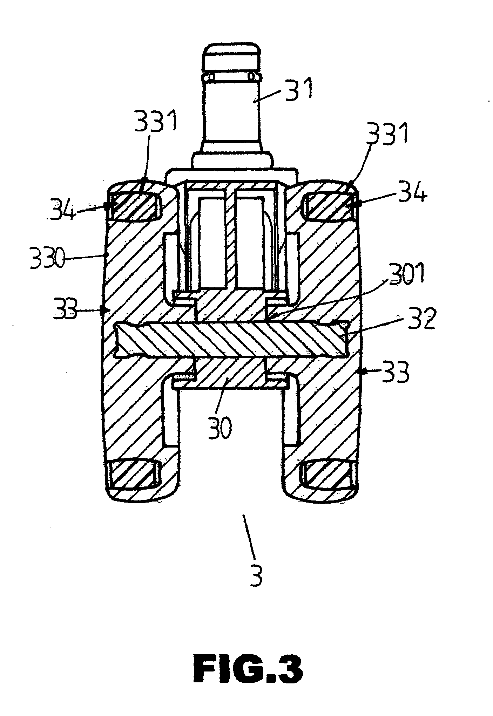

Referring to Figs. 1-3, a castor 3 in accordance with the preferred embodiment of the present invention comprises an upright post 31, a castor body 30 rotatably mounted on the upright post 31, two rollers 33 mounted on two opposite sides of the castor body 30, a support shaft 32 rotatably mounted in the castor body 30 and having two opposite ends each inserted into a respective one of the two rollers 33, and two elastic washers 34 each mounted on a respective one of the two rollers 33.

The castor body 30 has a periphery provided with an upright rotation hole 302 rotatably mounted on the upright post 31 and has a central portion provided with a shaft hole 301 to allow passage of the support shaft 32.

Each of the two rollers 33 has a first side abutting the castor body 30 and a second side provided with a receiving groove 331 to receive a respective one of the two elastic washers 34. The receiving groove 331 of each of the two rollers 33 has an annular shape. The receiving groove 331 of each of the two rollers 33 extends through a periphery of the first side of each of the two rollers 33.

Each of the two elastic washers 34 has an annular shape and has a variable color 340. Each of the two elastic washers 34 is fully hidden in the receiving groove 331 of the respective roller 33. Each of the two elastic washers 34 is flush with a surface 330 of the first side of the respective roller 33. Each of the two elastic washers 34 is exposed outwardly from the receiving groove 331 of the respective roller 33.

Accordingly, each of the two elastic washers 34 has a variable color 340 and can be exposed outwardly from the receiving groove 331 of the respective roller 33, thereby enhancing the aesthetic quality of the castor. In addition, each of the two elastic washers 34 has a shock-absorbing function, so that each of the two rollers 33 is rotatable smoothly, thereby providing a comfortable sensation to a user when the castor is moving and sliding. Further, each of the two elastic washers 34 provides a shock-absorbing function to each of the two rollers 33, so that each of the two rollers 33 is not worn out easily during a long-term utilization, thereby enhancing the lifetime of the castor.

Although the invention has been explained in relation to its preferred embodiment(s) as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. Castor, comprising:
an upright post (31);
a castor body (30) rotatably mounted on the upright post;
two rollers (33) mounted on two oppsosite sides of the castor body (30),
a support shaft (32) rotatably mounted in the castor body (30) and having two opposite ends each inserted into a respective one of the two rollers (33);
two elastic washers (34) each mounted on a respective one of the two rollers (33).

2. Castor in accordance with claim 1, wherein each of the two rollers (33) has a first side abutting the castor body (30) and a second side provided with a receiving groove (331) to receive a respective one of the two elastic washers (34).

3. Castor in accordance with claim 2, wherein
the receiving groove (331) of each of the two rollers (33) has an annular shape; each of the two elastic washers (34) has an annular shape.

4. Castor in accordance with claim 2, wherein the receiving groove (331) of each of the two rollers (33) extends through a periphery of the first side of each of the two rollers (33).

5. Castor in accordance with claim 2, wherein each of the two elastic washers (34) is fully hidden in the receiving groove (331) of the respective roller (33).

6. Castor in accordance with claim 2, wherein each of the two elastic washers (34) is flush with a surface (330) of the first side of the respective roller (33).

7. Castor in accordance with claim 2, wherein each of the two ealastic washers (34) is exposed outwardly from the receiving groove (331) of the respective roller (33).

8. Castor in accordance with claim 1, wherein each of the two elastic washers (34) has a variable color (340).
